# EUROPEAN PATENT SPECIFICATION

(11) **EP 3 326 841 B1**
(45) Date of publication and mention of the grant of the patent: **08.01.2020**
(21) Application number: 17397527.7
(22) Date of filing: 27.11.2017
(51) Int. Cl.: B60C 11/03, B60C 11/11

(54) **A GROOVE ARRANGEMENT OF A TREAD FOR A TIRE OR A TREAD BAND**
RILLENANORDNUNG EINER LAUFFLÄCHE FÜR EINEN REIFEN ODER EIN LAUFFLÄCHENBAND
AGENCEMENT DE RAINURES D'UNE BANDE DE ROULEMENT POUR UN PNEU OU UNE BANDE DE ROULEMENT

(43) Date of publication of application: 30.05.2018
(73) Proprietor: Nokian Renkaat Oyj, 37101 Nokia (FI)
(72) Inventor: PIRHONEN, Juha, 37180 Sarkola (FI)
(74) Representative: Berggren Oy, Tampere

(56) References cited:
- EP-A1- 3 093 163
- EP-A1- 3 095 621
- US-A- 5 759 313
- US-A1- 2007 163 692

## Description

### Technical field

The invention relates to vehicle tires. The invention relates to tread bands used for vehicle tires. The invention relates to a tread of tire or a tread band.

### Background

The surface of a tire forms a tread, which forms when the tire is in use, a rolling contact against a ground surface. The tread is responsible for grip, handling, and other driving properties of the tire. The tread limits grooves that guide water and/or slush away to help the other parts of the tread to grip the ground. The grooves are left in between tread blocks. The properties of a tire are constantly developed in order to improve grip and/handling of the tire. Particularly in winter tires the groove pattern in important, since slush is much harder to remove from under the tire than water.

In this field, the document EP3095621 discloses a pneumatic tire. The tread of the tire comprises a plurality of first primary grooves that are spaced apart from each other in a tire circumferential direction. Each of the first primary grooves have a first groove portion and a second groove portion that extends outward in the tire width direction from the first groove portion. The document US2007/0163692 discloses a pneumatic tire, which achieves rain groove wandering resistance. Plural steep-angle grooves are provided at opposite sides of the tire equatorial plane. The document US5759313 discloses a pneumatic tire in which sub-grooves extending at least in the width wise direction of the tire are provided. The document EP3093163 discloses a pneumatic tire that is provided in the tread portion with a pair of center main grooves arranged on both sides of the tire equator. Moreover, a pair of shoulder main grooves are arranged on both sides of the tire equator.

### Summary

The purpose the present invention is to present a tread block arrangement forming a tread of a tire or a tread band for a tire, which, when applied on a tire, improves grip and handling on snow, ice, and bare road. In particular, the tread has been observed to function well on a pneumatic winter tire for a passenger car.

The invention is disclosed in appended independent claim 1. The dependent claims disclose preferable embodiments. The description and figures disclose, in addition, other embodiments thereof.

### Brief description of the drawings

- Fig. 1a: shows a pneumatic tire having a tread block arrangement forming the tread of the tire, the tread block arrangement limiting a groove pattern,
- Fig. 1b: shows applying a tread band onto a preform of a tire,
- Fig. 1c: shows half of a cross-section of a tire,
- Fig. 2a: shows, as a top view, a tread block arrangement,
- Fig. 2b: shows, in a perspective view, a part of tread band,
- Fig. 2c: shows, as a seen from front, a part of a tire having a tread,
- Fig. 3a: shows, as a top view, a tread block arrangement that limits grooves,
- Fig. 3b: shows, as side view, an end of a longitudinal groove,
- Fig. 3c: shows, as a top view, a tread block arrangement, which defines a direction of rotation, and a primary direction of extension of a longitudinal groove,
- Fig. 4: shows, as a top view, a tread block arrangement that limits longitudinal grooves that extend longitudinally straight through the tread block arrangement,
- Fig. 5: shows, as a top view, a tread block arrangement that does not limit longitudinal grooves that extend longitudinally straight through the tread block arrangement,
- Fig. 6: not part of the invention, shows, as a top view, a tread block arrangement without intermediate tread blocks,
- Fig. 7: shows, as a top view, a tread block arrangement, wherein a longitudinal groove extends in between multiple tread blocks,
- Fig. 8: shows, as a top view, a symmetric tread block arrangement that limits grooves, and
- Fig. 9: shows, as a top view, a tread block arrangement, wherein a first primary transversal block or block part defines a direction of rotation, the tread block arrangement having an indicator indicative of a depth of the groove pattern.

### Detailed description

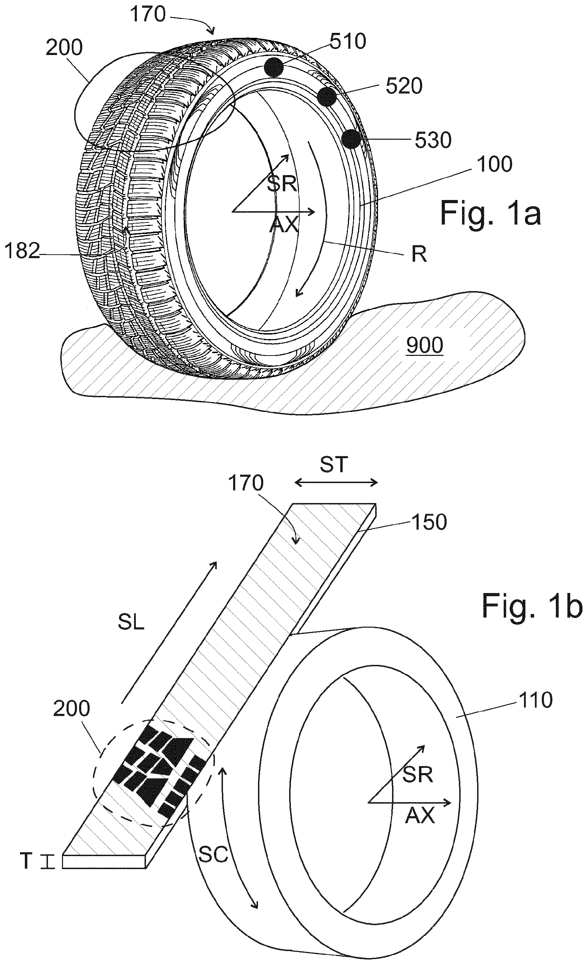

Fig. 1a shows a pneumatic tire 100 having a tread block arrangement 200 forming a tread 170 of the tire 100. The tread 170 of the tire 100 (or a tread band 150) refers to the part that makes contact with the ground surface 900 (e.g. the road or the ground) when in use. The tread 170 is meant for a rolling contact against a ground surface 900. The tread 170 is the top surface of the tread block arrangement 200. The tread block arrangement comprises tread blocks 210, 220, 240, i.e. blocks, as will be detailed below.

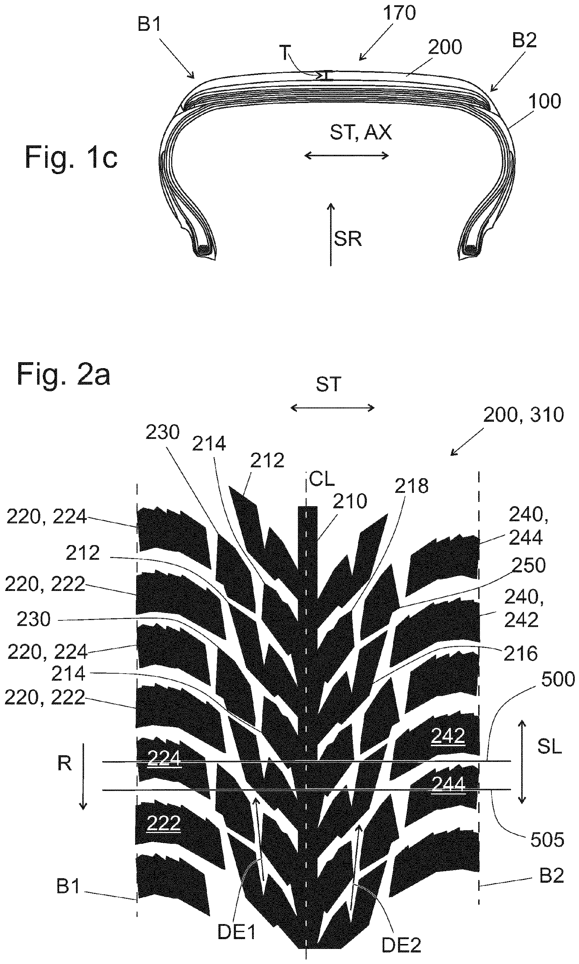

The direction of rotation of the tire 100 is indicated by the arrow R. The direction of rotation is parallel to a circumferential direction SC of the tire. The axial and radial directions of the tire 100 are indicated by the AX and SR, respectively. The tread block arrangement 200 can be formed onto the tire 100 e.g. in a moulding process. A longitudinal direction SL (See Fig. 1b) of the tread block arrangement is parallel to the circumferential direction SC of the pneumatic tire 100; and curves along the circumferential direction SC when the tread block arrangement 200 is on a tire. Moreover, at each point, the longitudinal direction of the tread block arrangement, i.e. the circumferential direction SC, is perpendicular to a transversal direction AX and perpendicular to the thickness T (see Figs. 1b and 1c) of the tread block arrangement 200. The thickness T is, on a tire, substantially parallel to the radial direction SR.

As an alternative to moulding, the tread 170 of a tire can be made by applying a tread band 150 onto a preform 110 of a tire to form the tire 100 with the tread 170. Referring to Fig. 1b, the tread band 150 may be a band extending in a longitudinal direction SL. Herein the longitudinal direction SL is perpendicular to a transversal direction ST and perpendicular to the thickness T of the tread band 150.

When applied onto the preform 110, the circumferential direction SC of the preform 110 is parallel with the longitudinal direction SL of the tread band 150. The tread band 150 has also a transversal direction ST, which is applied to be parallel with the axial direction AX of the preform 110. The tread 170 of the tread band 150 faces outwards, and forms the tread 170 of the tire 100. In this way, the tread band 150 also comprises a tread block arrangement 200 forming the tread 170.

Figure 1c shows a half of a cross section of the pneumatic tire 100. The tread 170 includes a primary boundary B1 and a secondary boundary B2 of the tread block arrangement 200, and the tread 170 is left in between these boundaries. The transversal direction ST is parallel to the axial direction AX. The radial direction SR is substantially parallel to a normal of a the tread 170, and parallel to the thickness T of the tread block arrangement 200 (or the tread band 150, if applicable). The circumferential direction SC is perpendicular to the plane of Fig. 1c (see also Figs. 1a and 1b).

The longitudinal direction (SL, SC) of the tread block arrangement 200 is parallel to the longitudinal direction SL of the tread band 150 or parallel to the circumferential SC direction of the pneumatic tire 100; depending on whether the arrangement 200 is part of a tread band 150 or a pneumatic tire 100. In contrast to the direction of rotation R, the longitudinal direction (SL, SC) may refer to either of the longitudinal directions. The transversal direction (ST, AX) of the tread block arrangement 200 is parallel to the transversal direction ST of the tread band 150 or parallel to the axial direction AX of the pneumatic tire 100; depending on whether the arrangement 200 is part of a tread band 150 or a pneumatic tire 100. The thickness of the tread block arrangement 200 is parallel to the radial direction SR of the pneumatic tire 100 or the thickness of the tread band 150.

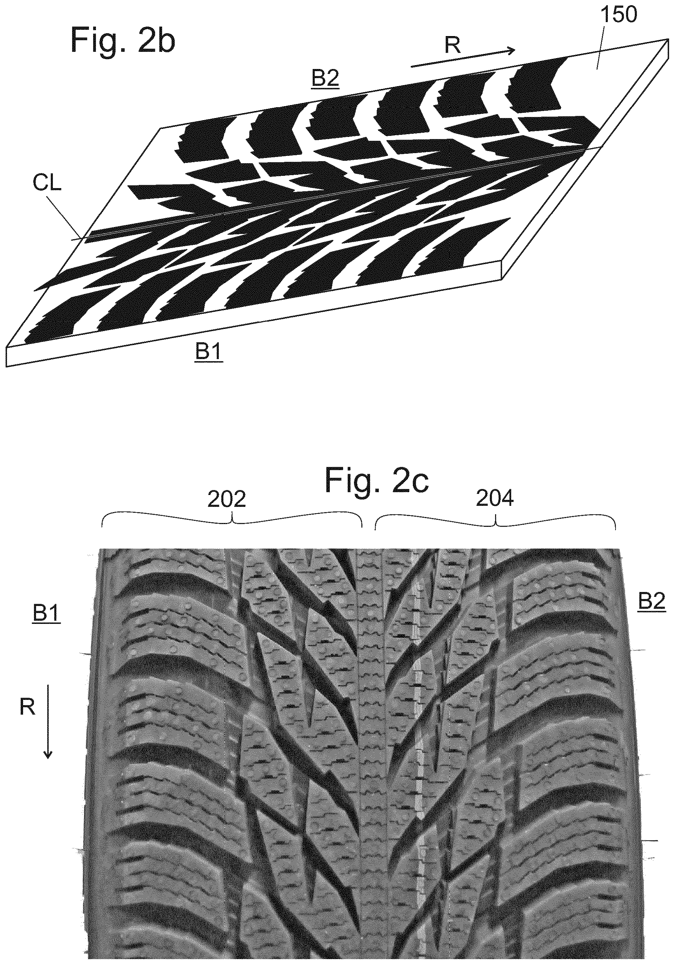

Figure 2a shows a tread block arrangement 200 of a pneumatic tire 100 in more detail. The tread block arrangement 200 comprises tread blocks 220, 210, 240; i.e. blocks 220, 210, 240 for short. In this description, a block refers to a tread block. In this description, a block refers to a part of the tread block arrangement 200 that is separated from other blocks of the tread block arrangement 200 by a portion of a groove. As an example, the blocks 220, 230, 240, 250 if Fig. 2a are separated from other blocks. However, the block parts 212, 214, 216, 218 are not separated from the middle block 210 by a groove, whereby the middle block 210 comprises also the block parts 212, 214, 216, 218. In this way, a block protrudes in the radial direction SR from a bottom of the grooves. A groove has a depth and a width. The depth of a groove may be at least 6 mm, such as at least 8 mm. The width of a groove may be at least 2 mm, such as at least 2.5 mm or at least 3 mm. A block may limit a sipe or sipes, of which width is typically much smaller, such as at most 1.5 mm. A block may surround a sipe or sipes. Sipes are indicated e.g. in Fig. 2c. The block may comprise sipes as known in prior art. In contrast, a block limits only a part of at least one side of a groove. In this description, the term "block part" refers to a part of a block. Thus, a block part of a block is not separated by a groove from a block part of the same block.

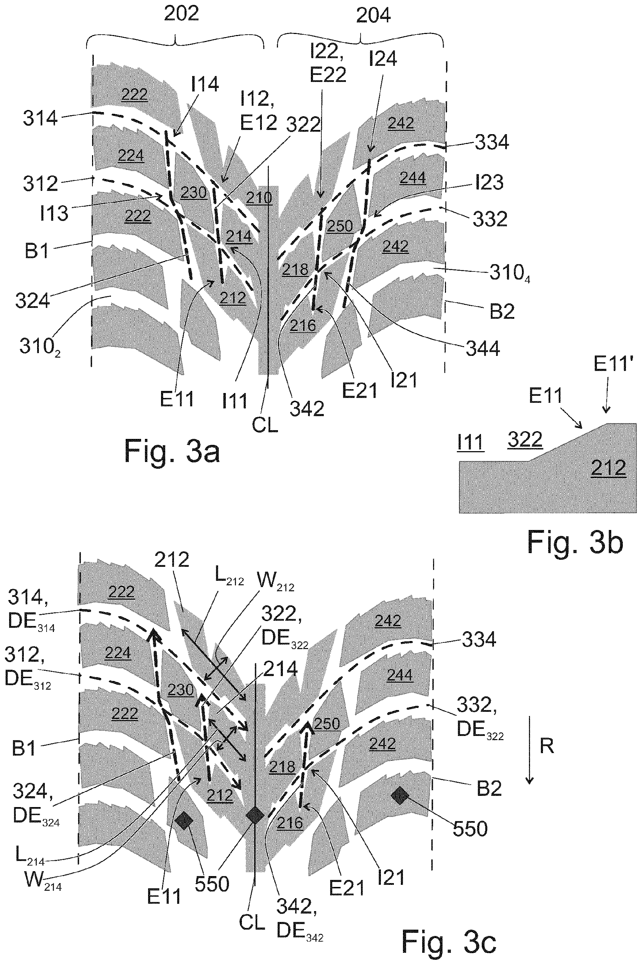

Referring to Figs. 2c and 3a, the tread block arrangement 200 comprises a primary part 202 and a secondary part 204. The primary part 202 refers to that part of tread block arrangement 200 that is left in between the longitudinal central line CL and a primary boundary B1 (see Figs. 2c, 3a, and 8). The secondary part 204 refers to that part of tread block arrangement 200 that is left in between the longitudinal central line CL and a secondary boundary B2 (see Figs. 2c, 3a and 8). The embodiments will first be discussed by discussing the structure of the tread block arrangement 200 of the primary part 202 of the tread block arrangement only. As shown in the figures, same structural features appear also on a secondary part 204 of the tread block arrangement. However, for completeness, the structure of the secondary part 204 will also be briefly discussed in the end of the description.

In Fig. 2a, the blocks are indicated in black colour, and the white areas in between the blocks indicate a groove patters 310. The groove pattern 310 comprises grooves and parts of grooves. Referring to Fig. 2a, in an embodiment, a tread block arrangement 200 comprises
- primary shoulder blocks 220, 222, 224 defining a primary boundary B1 of the tread block arrangement 200 and
- a middle block 210 extending through the tread block arrangement 200 in a direction SC, SL that is perpendicular to a transversal direction ST, AX of the tread block arrangement 200 and perpendicular to the thickness T of the tread block arrangement 200.

In the embodiment of Fig. 2a, the middle block 210 extends continuously in the longitudinal direction SL, SC. On a tread band 150, of which tread blocks form only one tread block arrangement 200, the middle block 210 extends continuously from one end to an opposite end of the tread band 150. On a tire 100, of which tread 170 is formed by only one tread block arrangement 200, the middle block 210 extends continuously around the circumference of the tire 100. Herein the continuous extensions means that the middle block 210 is only one block, whereby it is not an arrangement of blocks separated by a groove. Moreover, in an embodiment, a part of the middle block 210 is arranged, in the transversal direction AX, ST, at the centre in between the primary boundary B1 and an opposite secondary boundary B2. However, as detailed below and even if not preferable, a tread 170 may be made of at least two tread block arrangements.

The tread block arrangement 200 further comprises
- a first primary transversal block or block part 212 such that at least a part of a primary shoulder block 220, 222, 224 is arranged in the transversal direction ST, AX in between the first primary transversal block or block part 212 and the primary boundary B1,
- a second primary transversal block or block part 214, and
- a primary intermediate block or block part 230.

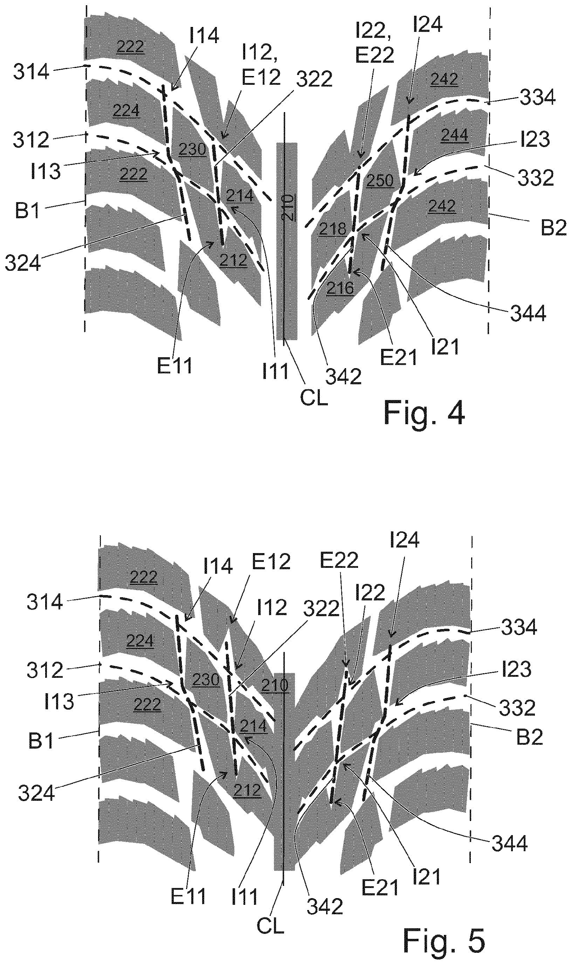

Herein the term "first primary transversal block or block part 212" refers to [i] a first primary transversal block or [ii] a first primary transversal block part. The term "transversal" will be discussed below. As indicated in Fig. 2a, the first transversal block or block part 212 may be a part of the middle block (i.e. it may be a block part), since no groove is left in between the block part 212 and the middle block 210. As indicated in Fig. 4, the first transversal block or block part 212 may be block, i.e., separated e.g. from the middle block 210. Thus, in an embodiment, the tread block arrangement 200 comprises [i] a first primary transversal block 212 or [ii] a first primary transversal block part 212 that is part of the middle block 210.

Herein the term "second primary transversal block or block part 214" refers to [i] a second primary transversal block or [ii] a second primary transversal block part. As indicated in Fig. 2a, the second transversal block or block part 214 may be a part of the middle block 210 (i.e. it may be a block part), since no groove is left in between the block part 214 and the middle block 210. As indicated in Fig. 4, the second transversal block or block part 214 may be block, i.e., separated e.g. from the middle block 210. Thus, in an embodiment, the tread block arrangement 200 comprises [i] a second primary transversal block 214 or [ii] a second primary transversal block part 214 that is part of the middle block 210.

Also the intermediate block or block part 230 may be a block separated from other blocks, as in Fig. 2a. Thus, in an embodiment, the tread block arrangement 200 comprises [i] a primary intermediate block 230 or [ii] a primary intermediate block part 230 that is part of a primary shoulder block 220.

The second primary transversal block or block part 214 is left, in the direction SC, SL that is perpendicular to a transversal direction ST, AX of the tread block arrangement 200 and perpendicular to the thickness T of the tread block arrangement 200, a distance apart from the first primary transversal block or block part 212. Thus, in an embodiment, a part of a first primary transversal groove 312 is left between the first primary transversal block or block part 212 and the second primary transversal block or block part 214, as indicated in Fig. 3a. The groove pattern 310 will be discussed in more detail below.

As evident, such a tread block arrangement 200 is suitable for a pneumatic tire 100 or for a tread band 150 for a pneumatic tire 100, as indicated in Figs. 1a and 1b.

Since these blocks or block parts form a part of the primary part 202, in an embodiment,
- the first primary transversal block or block part 212 is arranged in between the longitudinal central line CL and the primary boundary B1,
- the second primary transversal block or block part 214 is arranged in between the longitudinal central line CL and the primary boundary B1, and
- the primary intermediate block or block part 230 is arranged in between the longitudinal central line CL and the primary boundary B1.

Such an arrangement of the blocks improve the grip and handling of the tire. Each block 210, 220 of the tread block arrangement 200 is separated from another block 210, 220 of the tread block arrangement 200 by a portion of a groove pattern 310. The groove pattern 310 is left in between the blocks. Thus, the tread block arrangement 200 limits a groove pattern 310. The function of the grooves of the groove pattern 310 is to guide water and/or slush away from under the tire so as to improve grip. Therefore, the arrangement of different parts of the groove pattern 310 relative to each other also improve grip and handling of the tire. Referring to Figs. 2a and 3a, in an embodiment, the blocks and block parts of the tread block arrangement 200 are arranged relative to each other in such a way that the groove pattern 310, limited by the tread block arrangement 200, comprises
- a first primary longitudinal groove 322,
- a first primary transversal groove 312 extending from the primary boundary B1 towards a central line CL of the tread block arrangement 200, and
- a second primary transversal groove 314 extending from the primary boundary B1 towards the central line CL of the tread block arrangement 200.

As indicated in the figures, the first primary transversal groove 312 needs not to propagate in a direction parallel to the transversal direction (AX, ST). In contrast, as detailed below, preferably, the first primary transversal groove 312 extends in a direction DE₃₁₂ that forms an angle with the transversal direction (AX, ST). As indicated in the figures, the second primary transversal groove 314 needs not to propagate in a direction parallel to the transversal direction (AX, ST). In contrast, as detailed below, preferably, the second primary transversal groove 314 extends in a direction DE₃₁₄ that forms an angle with the transversal direction (AX, ST). Thus, in an embodiment, the first primary transversal groove 312 extends from the primary boundary B1 inclined towards a central line CL of the tread block arrangement 200. Moreover, in an embodiment, the second primary transversal groove 314 extends from the primary boundary B1 inclined towards a central line CL of the tread block arrangement 200.

The first primary longitudinal groove 322 allows for water and/or slush to move also in the longitudinal direction, while the first and second primary transversal grooves 312, 314 guide water and/or slush towards the primary boundary B1.

Herein the central line CL is a line extending in the direction SC, SL that is perpendicular to a transversal direction ST, AX of the tread block arrangement 200 and perpendicular to the thickness T of the tread block arrangement 200; and is arranged in the centre in between the primary boundary B1 and an opposite secondary boundary B2. The term "longitudinal" in connection with the grooves will be discussed in more detail below. As indicated in the figures, the primary boundary B1 is parallel to a direction that is perpendicular to a transversal direction ST, AX of the tread block arrangement 200 and perpendicular to the thickness T of the tread block arrangement 200. The secondary boundary B2 is parallel to the primary boundary B1.

The first primary transversal groove 312 extends from the primary boundary B1 to a first primary intersection 111 of the first primary longitudinal groove 322 and the first primary transversal groove 312 in order to guide water and/or slush from the first primary transversal groove 312 and the first primary intersection 111 to the primary boundary B1.

The second primary transversal groove 314 extends from the primary boundary B1 to a second primary intersection 112 of the first primary longitudinal groove 322 and the second primary transversal groove 314 in order to guide water and/or slush from the first primary transversal groove 312 and the second primary intersection 112 to the primary boundary B1.

As indicated above, the first primary longitudinal groove 322 is arranged in between the longitudinal central line CL and the primary boundary B1.

In order for the first primary transversal block or block part 212 to have a reasonable grip and stiffness in the longitudinal direction (SC, SL), and also a proper water drainage of the first primary longitudinal groove 322, the first primary transversal block or block part 212 forms
- a part of a side wall of the first primary longitudinal groove 322,
- a part of another side wall of the first primary longitudinal groove 322,
- a first primary end wall E11 of the first primary longitudinal groove 322.

Thus, as indicated in Fig. 3c, the first primary longitudinal groove 322 may be considered to start from the first primary end wall E11, which is formed by the first primary transversal block or block part 212. The first primary longitudinal groove 322 extends from the first primary end wall E11. Moreover, the first primary transversal block or block part 212 also forms parts of two opposite sidewalls of the first primary longitudinal groove 322. Thus, the first primary longitudinal groove 322 guides water and/or slush away from under the first primary transversal block or block part 212. Moreover, the longitudinal size of the transversal block or block part 212 remains reasonable wide, since the first primary longitudinal groove 322 does not divide the whole of the first primary transversal block or block part 212. This increases the stiffness of the first primary transversal block or block part 212 and in this way improves the longitudinal grip.

Since a part of a first primary transversal groove 312 is left between the first primary transversal block or block part 212 and the second primary transversal block or block part 214,
- the first primary transversal block or block part 212 forms a part of a side wall of the first primary transversal groove 312, and
- the second primary transversal block or block part 214 forms a part of another side wall of the first primary transversal groove 312.

Referring to Figs. 2a and 3a, in an embodiment, the second primary transversal block or block part 214 forms a part of a side wall of also the second primary transversal groove 314.

This helps to form a first primary transversal groove 312 and a second primary transversal groove 314. Such transversal grooves 312, 314 are configured guide the water and/or slush away from the first primary longitudinal groove 322 towards the primary boundary B1. As indicated above, the first 312 and second 314 primary transversal grooves extend from the primary boundary B1 towards a central line CL.

In order to guide water and/or slush also from the first primary longitudinal groove 322 longitudinal groove to the primary boundary B1, with reference to Fig. 3a, in the embodiment, the first primary longitudinal groove 322 extends
- from the first primary end wall E11 to a first primary intersection 111 of the first primary longitudinal groove 322 and the first primary transversal groove 312 and
- from the first primary intersection 111 to a second primary intersection 112 of the first primary longitudinal groove 322 and the second primary transversal groove 314.

The a middle block 210 extends through the tread block arrangement 200 in the circumferential SC or the longitudinal direction SL. Thus, the tread block arrangement 200 is free from a transversal groove that extends from the primary boundary B1 to the secondary boundary B2. This has the effect that the middle block 210 is rigid in the in the circumferential SC or longitudinal direction SC, SL. This improves handling of the tire. However, a tread 170 may 170 may comprise more than one such a tread block arrangement 200. Thus, in between such tread block arrangements, a transversal groove may extend from the primary boundary B1 to the secondary boundary B2. However, preferably also the tread 170 is free from a transversal groove that extends from the primary boundary B1 to the secondary boundary B2. Therefore, in an embodiment, a tread 170 (of a tire 100 or a tread band 150) consists of only one tread block arrangement 200 as discussed in this description.

As for the term "transversal" in connection with grooves, referring to Fig. 3c, in an embodiment, the first primary transversal groove 312 is transversal such that
- the first primary transversal groove 312 extends in a direction of extension DE₃₁₂ of the first primary transversal groove 312 a longer distance than in another direction,
- at each point of the first primary transversal groove 312 the direction of extension DE₃₁₂ is parallel to the transversal direction AX, ST or forms an angle of less than 45 degrees with the transversal direction (AX, ST).

Preferably, the aforementioned direction of extension DE₃₁₂ forms, at least in some point of observation, an angle of at least 5 degrees with the transversal direction (AX, ST). As indicated in Fig. 3a, preferably the angle between the directions DE₃₁₂ and AX is smaller near the primary boundary B1 than further away from the primary boundary (i.e. near the central line CL).

In an embodiment, the second primary transversal groove 314 is transversal such that
- the second primary transversal groove 314 extends in a direction of extension DE₃₁₄ of the second primary transversal groove a longer distance than in another direction,
- at each point of the second primary transversal groove 314 the direction of extension DE₃₁₄ is parallel to the transversal direction AX, ST or forms an angle of less than 45 degrees with the transversal direction (AX, ST).

Preferably, the aforementioned direction of extension DE₃₁₄ forms, at least in some point of observation, an angle of at least 5 degrees with the transversal direction (AX, ST). As indicated in Fig. 3a, preferably the angle between the directions DE₃₁₄ and AX is smaller near the primary boundary B1 than further away from the primary boundary (i.e. near the central line CL).

As for the term "transversal" in connection with blocks or parts thereof, referring to Fig. 3c, in an embodiment, the first primary transversal block or block part 212 is transversal such that
- a cross section of the first primary transversal block or block part 212 on a plane having a normal parallel to the thickness T of the tread block arrangement has a length L₂₁₂ and a width W₂₁₂, wherein the length L₂₁₂ is greater than the width W₂₁₂, and
- the length is L₂₁₂ is parallel to the transversal direction AX, ST or forms an angle of less than 80 degrees or less than 60 degrees with the transversal direction (AX, ST).
As is conventional, the width W₂₁₂ is perpendicular to the length L₂₁₂.

In an embodiment, the second primary transversal block or block part 214 is transversal such that
- a cross section of the second primary transversal block or block part 214 on a plane having a normal parallel to the thickness T of the tread block arrangement has a length L₂₁₄ and a width W₂₁₄, wherein the length L₂₁₄ is greater than the width W₂₁₄, and
- the length is L₂₁₄ is parallel to the transversal direction AX, ST or forms an angle of less than 80 degrees or less than 60 degrees with the transversal direction (AX, ST).
As is conventional , the width W₂₁₄ is perpendicular to the length L₂₁₄.

As indicated above, some of the grooves are longitudinal. As for the term "longitudinal" in connection with grooves, referring to Fig. 3c, in an embodiment, the first primary longitudinal groove 322 is longitudinal such that
- the first primary longitudinal groove 322 extends in a direction of extension DE₃₂₂ of the first primary longitudinal groove 322 a longer distance than in another direction,
- at each point of the first primary longitudinal groove 322 the direction of extension DE₃₂₂ is forms an angle of more than 45 degrees with the transversal direction (AX, ST).

Fig. 2a shows an embodiment of a tread block arrangement 200, as seen from top. Fig. 2a also indicates the direction of rotation R, when applied on a tire of a vehicle, and the vehicle moves forward. Fig. 2b shows a tread band 150 having the tread block arrangement 200 of Fig. 2a. The tread band 150 can be used on a tire, as shown e.g. in Fig. 1b. Fig. 2c shows, as a front view, a tire have a tread block arrangement substantially similar to that of Fig. 2a. As indicated in Fig. 2c, the blocks limit sipes, and a part of a groove pattern 310 is left in between the blocks.

Referring to Figs. 2a, 3a, 3c, 5, 6, 7, and 8, in an embodiment, the middle block 210 comprises the first primary transversal block part 212 whereby the first primary transversal block part 212 is not separated from the middle block 210 by a portion of the groove pattern 310. As a result, the first primary transversal groove 312 extends from the primary boundary B1 to the middle block 210. However, as indicated in Fig. 4, the first primary transversal block 212 may be separated from other blocks. Also in the embodiment of Fig. 4, the first primary transversal groove 312 extends from the primary boundary B1 to the middle block 210.

Referring to Figs. 2a, 3a, 3c, 5, 6, 7, and 8, in an embodiment, the middle block 210 comprises the second primary transversal block part 214 whereby the second primary transversal block part 214 is not separated from the middle block 210 by a portion of the groove pattern 310. As a result, the first primary transversal groove 312 extends from the primary boundary B1 to the middle block 210. However, as indicated in Fig. 4, the second primary transversal block 214 may be separated from other blocks. Also in the embodiment of Fig. 4, the first primary transversal groove 312 extends from the primary boundary B1 to the middle block 210.

Preferably, the second primary transversal groove 314 extends from the primary boundary B1 to the middle block 210. More preferably, both the first primary transversal groove 312 and the second primary transversal groove 314 extend from the primary boundary B1 to the middle block 210.

In an embodiment, the first primary transversal groove 312 extends from the first primary intersection 111 into two directions that are reverse to each other. This has the effect that the first primary transversal groove 312 is configured to convey water and/or slush not only from the first primary longitudinal groove 322, but also from a location closer to the centreline CL, towards the primary boundary B1.

In an embodiment, the second primary transversal groove 314 extends from the second primary intersection 112 into two directions that are reverse to each other. This has the effect that the second primary transversal groove 314 is configured to convey water and/or slush not only from the first primary longitudinal groove, but also from a location closer to the centreline CL, towards the primary boundary B1.

As indicated in the figures, both the first 312 and the second 314 primary transversal grooves may extend, from the first 111 and the second 112 primary intersection, respectively, in two directions that are reverse to each other.

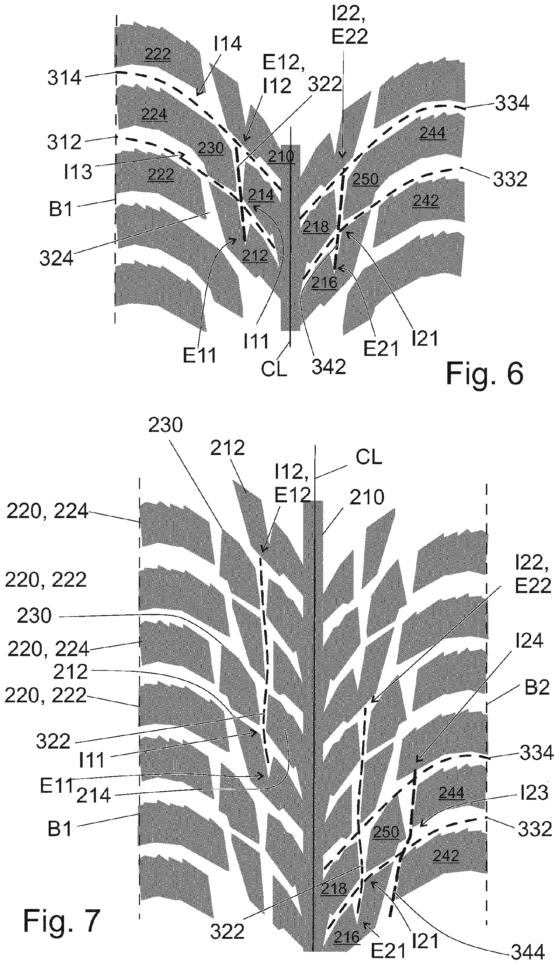

Referring to e.g. Figs. 3a, 4, and 5, in addition to the first primary longitudinal groove 322, an embodiment of the tread block arrangement 200 limits also a second primary longitudinal groove 324. The purpose of the second primary longitudinal groove 324 is also to improve the removal of water and/or slush from under the tire. In Fig. 6 the intermediate block part 230 is part of a primary shoulder block. However, preferably the tread block arrangement 200 limits also the second longitudinal groove.

To further discuss the features of such an embodiment, one of the primary shoulder blocks 220 is referred to as a first primary shoulder block 222 and another one of the primary shoulder blocks 220 is referred to as a second primary shoulder block 224. As indicated in the figures, the first primary shoulder block 222 may be a neighbouring block to the second primary shoulder block 224. In other words, in an embodiment, no block is left in between the first primary shoulder block 222 and the second primary shoulder block 224.

In addition, the tread block arrangement 200 comprises a primary intermediate block 230, of which a part is arranged in the direction of extension DE₃₁₂ of the first primary transversal groove 312 in between the second primary shoulder block 224 and the second primary transversal block 214 or block part. In particular, in an embodiment, at least half of a primary intermediate block 230 is arranged in the direction of extension DE₃₁₂ of the first primary transversal groove 312 in between the second primary shoulder block 224 and the second primary transversal block 214 or block part. Moreover, the primary intermediate block 230 is separated by a part of a groove from the second primary shoulder block 220, 224 and by another part of a groove from the second primary transversal block or block part 214. In this way, the groove pattern 310 comprises a second primary longitudinal groove 324, as indicated in e.g. Figs. 3a, 4, and 5. The second primary longitudinal groove 324 is arranged on the primary part 202 of the tread block arrangement 200. Thus, the second primary longitudinal groove 324 is arranged in between the central line CL and the primary boundary B1. In an embodiment, a part of the second primary longitudinal groove 324 is arranged in between the first primary longitudinal groove 322 and the primary boundary B1.

As indicated in Figs. 3a, 4, and 5, a part of the second primary longitudinal groove 324 is left in between the first primary shoulder block 222 and the first primary transversal block or block part 212 in the transversal direction ST, AX. Moreover, a part of the second primary longitudinal groove 324 is left in between second primary shoulder block 224 and the primary intermediate block 230 in the transversal direction ST, AX.

In this way, a the first primary transversal groove 312 extends from the first primary intersection 111 to a third primary intersection 113. The third primary intersection 113 is an intersection of the first primary transversal groove 312 and the second primary longitudinal groove 324. Moreover, the second primary transversal groove 314 extends from the second primary intersection 112 to a fourth primary intersection 114. The a fourth primary intersection 114 is an intersection of the second primary transversal groove 314 and the second primary longitudinal groove 324.

As indicated by the wording, also the second primary longitudinal groove 324 is longitudinal. Thus, with reference to Fig. 3c, in an embodiment, the second primary longitudinal groove 324 is longitudinal such that
- the second primary longitudinal groove 324 extends in a direction of extension DE₃₂₄ of the second primary longitudinal groove 324 a longer distance than in another direction,
- at each point of the second primary longitudinal groove 324 the direction of extension DE₃₂₄ is forms an angle of more than 45 degrees with the transversal direction (AX, ST).

As indicated in Fig. 3c, in an embodiment, the second primary longitudinal groove 324 is longer than the first primary longitudinal groove 322. Thus, in an embodiment, the first primary longitudinal groove 322 (i.e. the whole first primary longitudinal groove 322) is left in between the second primary longitudinal groove 324 and the central line CL. This has the effect, that, in a central area of the tread, i.e. near the central line CL, the tread is somewhat stiffer in the circumferential direction SC than near the boundaries B1 and B2. This improves handling of the tire during driving. Moreover, in an embodiment, only a part of the second primary longitudinal groove 324 is left in between the first primary longitudinal groove 322 and the primary boundary B1.

Referring to Fig. 3a, in an embodiment, the first primary longitudinal groove 322 forms a crossing with the first primary transversal groove 312 at the first primary intersection 111. Because of the crossing, the first primary longitudinal groove 322 extends from the first primary intersection 111 in two directions that are reverse to each other. Moreover, because of the crossing, the first primary transversal groove 312 extends from the first primary intersection 111 in two other directions that are reverse to each other. Having such a crossing also improves the removal of water and/or slush.

For reasons indicated above, the first primary longitudinal groove 322 is reasonably short. Therefore, with reference to Fig. 3a, in an embodiment, the first primary longitudinal groove 322 extends in between the first primary end wall E11 of the first primary longitudinal groove 322 and a second primary end E12 of the first primary longitudinal groove 322 such that the first primary longitudinal groove 322 forms only one crossing with transversal parts 312, 314 of the groove pattern 310. The transversal part refers to, in particular the first and second primary transversal grooves 312, 314. However, the groove pattern 310 may comprise also other transversal parts, as indicated e.g. in Fig. 7. In the embodiment of Fig. 7, the first primary longitudinal groove 322 forms three crossings with transversal parts of the groove pattern 310.

The term "crossing" refers to a crossing of (at least) two grooves, whereby at least four parts of a groove extend from a crossing into different directions. For example, in Fig. 3a, the first primary intersection 111 is a crossing, as both the grooves 322 and 312 extend therefrom into two reverse directions. However, in Fig. 3a, the second primary intersection 112 is not a crossing, since the groove 322 extends therefrom to only one direction. Thus groove parts extend only in three directions from the intersection 112. However, referring to Fig. 5 it is possible that both the intersections 111 and 112 form crossings in the aforementioned meaning. The term "crossing" preferably refers to a crossing of (exactly) two grooves, whereby exactly four parts of a groove extend from a crossing into different directions.

In order to have many of the blocks rigid in the longitudinal or circumferential direction, preferably, the first primary longitudinal groove 322 extends only in one direction from the second primary intersection 112. Such an embodiment is indicated e.g. in Figs. 3a, 4, and 7. In contrast, when the first primary longitudinal groove 322 extends in two directions from the second primary intersection 112, as in the embodiment of Fig. 5, the block that limits the second end E12 becomes less rigid in the circumferential direction. Therefore, in an embodiment, the first primary longitudinal groove 322 extends, in the direction of its length from the first primary end wall E11 only up to the second primary intersection 112.

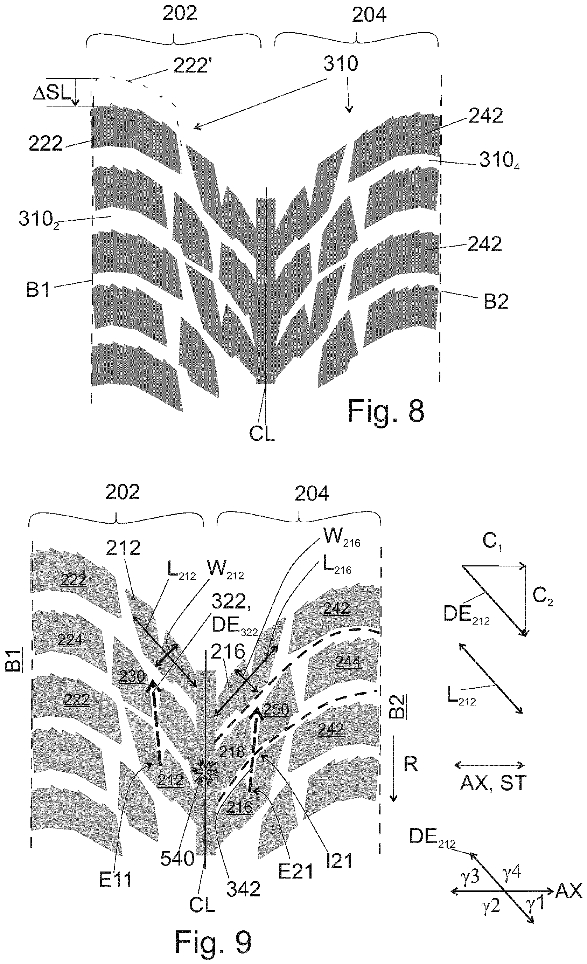

Typically, the tread block arrangement 200 defines a direction of rotation R for the tread, when used on a tire 100. It is even possible that that tire 100 comprises a first marking 510, as indicated in Fig. 1a, indicative of the direction of rotation R. However, such a direction is typically visible also from the tread block arrangement itself. Referring to Figs. 3c and 9, the first primary transversal block or block part 212 has a length L₂₁₂ and a width W₂₁₂, as defined in more detail above. In a preferable embodiment, the length is L₂₁₂ forms an angle of at least 10 degrees with the transversal direction (AX, ST). This has the effect that the leading edge of the first primary transversal block or block part 212, when making a contact with ground or road while driving, drives water and/or slush well in a transversal groove.

Referring to Fig. 9, when the direction DE₂₁₂ of the length L₂₁₂ is not parallel with the transversal direction AX, ST, the direction DE₂₁₂ of the length L₂₁₂ forms four angles γ1, γ2, γ3, and γ4 with the transversal direction AX, ST. Two of these angles (γ1 and γ3) are equal to each other and smaller than the other two (γ2, γ4). Referring to Fig. 9, that one of the smallest two angles (γ1, γ3), which opens towards to the central line CL also defines direction of rotation R. More precisely, that one (i.e. γ1) of the smallest angles (γ1, γ3) that opens towards the central line CL also open opens in the direction of rotation R. Moreover, the direction of rotation R is perpendicular to the transversal direction ST, AX of the tread block arrangement 200 and perpendicular to the thickness T of the tread block arrangement 200.

In this way and with reference to Fig. 9, the direction DE₂₁₂ of the length L₂₁₂ of the first primary transversal block or block part 212 has:
- a first positive component C₁ in a direction that is parallel to the transversal direction AX, ST and is directed from the primary boundary B1 towards to central line CL and
- a second positive component C₂ in the direction of rotation R, which is perpendicular to the transversal direction AX, ST and to the thickness T of the tread block arrangement.

Herein the term "component" refers to a component of a linear combination of the direction DE₂₁₂ of the length L₂₁₂ of as defined by aforementioned directions, and a "positive component" means that a factor of the corresponding direction is more than zero. As is conventional from vector algebra, the direction DE₂₁₂ that is parallel to the length L₂₁₂ of the first primary transversal block or block part 212 is the sum of the aforementioned first positive component C₁ and second positive component C₂, as indicated in Fig. 9.

Referring to Fig. 9, the secondary part 204 of the tread block arrangement 200 also comprises a first secondary transversal block or block part 216. Moreover, the first primary transversal block or block part 212 and the first secondary transversal block or block part 216 form, in combination, a V-shaped object in such a way that the V of the V-shaped object opens to a direction that is reverse to the direction of rotation R.

It has been noticed that the first primary longitudinal groove 322 guides water and/or slush particularly well, when it is directed relative to the direction of rotation R in a substantially reverse direction. Thus, in an embodiment, the first primary longitudinal groove 322 extends from the first primary end wall E11 to the first primary intersection 111 in a primary direction of extension DE₃₂₂. Moreover, to have the aforementioned effect, the primary direction of extension DE₃₂₂ forms an angle of at least 120 degrees with the direction of rotation R. Preferably, the primary direction of extension DE₃₂₂ forms an angle of at least 150 degrees or at least 165 degrees with the direction of rotation R.

In order to guide water and/or slush well, the first primary end wall E11 and/or the bottom of the first primary longitudinal groove 322 is inclined. Having such an inclined wall and/or bottom also improves the rigidity of the a first primary transversal block or block part 212. Therefore, in an embodiment, a part the first primary longitudinal groove 322 has an inclined bottom such that the depth of the first primary longitudinal groove 322 decreases, when moving from the first primary intersection 111 towards an end E11' defined by the first primary end wall E11. In an embodiment, the bottom of the first primary longitudinal groove 322 is free from steps. Thus, in an embodiment, a part the first primary longitudinal groove 322 has an inclined bottom such that the depth of the first primary longitudinal groove 322 decreases continuously, when moving from the first primary intersection 111 towards an end E11' defined by the first primary end wall E11. Such a bottom is shown in Fig. 3b. Fig. 3b shows a cross section of the first primary longitudinal groove 322 near the first primary end wall E11. The first primary end wall E11 forms a part of a bottom of the first primary longitudinal groove 322. The first primary end wall E11 defines an end E11' for the first primary longitudinal groove 322. The first primary end wall E11 defines the end E11' of the first primary longitudinal groove 322 to that location, in which the first primary end wall E11 rises up to surface of the first primary transversal block or block part 212, which comprises the first primary end wall E11.

Having discussed the primary part 202 of the tread block arrangement, it is noted that, at least some same structural features appear also on a secondary part 204 of the tread block arrangement.

Referring to Fig. 8, the central line CL divides the tread block arrangement 200 (and thus also the tread 170) in to a primary part 202 and a secondary part 204, wherein the primary part 202 is left in between the primary boundary B1 and the central line CL, and the secondary part 204 is left in between a secondary boundary B2 and the central line CL. Moreover, the central line CL is left in between the primary boundary B1 and the secondary boundary B2. Referring to Fig. 8, in an embodiment, the central line is left in the middle in between the in between the primary boundary B1 and the secondary boundary B2.

As indicated in Fig. 8, the primary part 202 tread block arrangement 200 limits a primary portion 310₂ of the groove pattern 310 and the secondary part 204 tread block arrangement 200 limits a secondary portion 310₄ of the groove pattern 310 such that the groove pattern 310 consists of the primary portion 310₂ and the secondary portion 310₄.

Referring to Fig. 8, in an embodiment, the groove pattern 310 is reflective symmetric about the central line CL. In other words, the secondary portion 310₄ of the groove pattern 310 is a mirror image of the primary portion 310₂ of the groove pattern 310.

However, as indicated in other figures, preferably the groove pattern 310 is not reflective symmetric about the central line CL. Referring to Figs. 2a, 2c, 3a, 4, 5, 6, and 7, preferably, the secondary portion 310₄ of the groove pattern 310 is a longitudinally transferred mirror image of the primary portion 310₂ of the groove pattern 310. For example, by comparing the Figs. 8 and 3a, the primary part 202 of the tread block arrangement of Fig. 8 has been longitudinally transferred a distance of ΔSL relative to Fig. 3a, considering that the first secondary shoulder blocks 242 are at the same locations in these Figs. This has been indicated in Fig. 8 by a dashed line 222', which indicates a position of a primary shoulder block 222 corresponding to the embodiment of Fig. 3a, when the first secondary shoulder blocks 242 are at the same locations in these Figs. Thus, ΔSL is the distance the primary shoulder block 222 of Fig. 3a has been moved in order to arrive at the reflective symmetric embodiment of Fig. 8. Moreover, since the groove pattern 310 of Fig. 8 is reflective symmetric about the central line CL, in Fig. 3a, the secondary portion 310₄ of the groove pattern 310 is a longitudinally transferred mirror image of the primary portion 310₂ of the groove pattern 310. It is also noted that the blocks may limit sipes. The sipes may be formed in arbitrary locations. Thus, the secondary part 204 of the tread block arrangement needs not to be a longitudinally transferred mirror image of the primary part 202 of the tread block arrangement, even if the secondary portion 310₄ is a longitudinally transferred mirror image of the primary portion 310₂.

In this way, in an embodiment, the central line CL divides the tread block arrangement 200 to a primary part 202 and a secondary part 204 such that the primary part 202 tread block arrangement 200 limits a primary portion 310₂ of the groove pattern 310 and the secondary part 204 tread block arrangement 200 limits a secondary portion 310₄ of the groove pattern 310 such that the groove pattern 310 consists of the primary portion 310₂ and the secondary portion 310₄. Moreover, [A] the secondary portion 310₄ is a longitudinally transferred mirror image of a groove pattern of the primary portion 310₂ or [B] the secondary portion 310₄ is a mirror image of a groove pattern of the primary portion 310₂. As indicated above, the mirror plane for the mirror image is the central line CL.

As indicated above, a groove pattern 310₄ limited by the secondary part 204 is a longitudinally transferred mirror image of a groove pattern 310₂ limited by the primary part 202 or a mirror image of a groove pattern 310₂ limited the primary part 202. To have such groove patterns, the secondary part 204 comprises corresponding tread blocks.

Thus, referring to Fig. 2a, in an embodiment the tread block arrangement 200 comprises
- secondary shoulder blocks 240, 242, 244 defining a secondary longitudinal boundary B2 and
- in the transversal direction ST, AX in between the central line CL and the secondary boundary B2,
   - a first secondary transversal block or block part 216,
   - a second secondary transversal block or block part 218, and
   - a secondary intermediate block or block part 250.

Also these blocks limit the groove pattern 310. Referring to Fig. 3a, the groove pattern comprises
- a first secondary longitudinal groove 342,
- a first secondary transversal groove 332 extending from the secondary boundary B2 towards the central line CL of the tread block arrangement 200, and
- a second secondary transversal groove 334 extending from the secondary boundary B2 towards the central line CL of the tread block arrangement 200.

In a manner similar to the primary transversal grooves, in an embodiment, the first secondary transversal groove 332 extends from the secondary boundary B2 inclined towards a central line CL of the tread block arrangement 200. Moreover, in an embodiment, the second secondary transversal groove 334 extends from the secondary boundary B2 inclined towards a central line CL of the tread block arrangement 200.

In a similar manner as on the primary part 202, on the secondary part 204, the first secondary transversal block or block part 216 forms a part of a side wall of the first secondary longitudinal groove 342, a part of another side wall of the first secondary longitudinal groove 342, and a first secondary end wall E21 of the first secondary longitudinal groove 342. Moreover, the first secondary transversal block or block part 216 forms a part of a side wall of the first secondary transversal groove 332, and the second secondary transversal block or block part 218 forms a part of another side wall of the first secondary transversal groove 332.

In order for the grooves of the secondary part 204 to guide water and/or slush well, the first secondary longitudinal groove 342 extends from the first secondary end wall E21 to a first secondary intersection 121 of the first secondary longitudinal groove 342 and the first secondary transversal groove 332. The first secondary longitudinal groove 342 further extends from the first secondary intersection 121 to a second secondary intersection 122 of the first secondary longitudinal groove 342 and the second secondary transversal groove 334.

Moreover, the first primary transversal block or block part 212 and the second primary transversal block or block part 214 are arranged in the transversal direction ST, AX in between the central line CL of tread block arrangement 200 and the primary boundary B1.

Referring to Fig. 2a, in an embodiment the primary shoulder blocks 220, 222, 224 and the secondary shoulder blocks 240, 242, 244 are arranged relative to each other such that a first imaginary transversal straight line 500 is arrangeable in a longitudinal direction SL, SC in between two neighbouring secondary shoulder blocks 242, 244 such that the first imaginary transversal straight line 500 propagates through a primary shoulder block 220, 222, 224. Herein the first imaginary transversal straight line 500 is parallel to the transversal direction AX, ST. Preferably each imaginary transversal straight line 500 that is arranged in a longitudinal direction SL, SC in between two neighbouring secondary shoulder blocks 240, 242, 244, propagates through a primary shoulder block 220, 222, 224. As indicated in Fig. 2a, the first imaginary transversal straight line 500 is parallel to the transversal direction ST, AX.

This has the effect that the grip does not depend on the orientation of the tire relative to the ground surface 900. As the tire rotates, the primary shoulder blocks 220, 222, 224 and the secondary shoulder blocks 240, 242, 244 escape from the footprint subsequently, and not simultaneously. This makes the grip more uniform.

In addition or alternatively, a second imaginary transversal straight line 505 is arrangeable in a longitudinal direction SL, SC in between two neighbouring primary shoulder blocks 222, 224 such that the second imaginary transversal straight line 505 propagates through a secondary shoulder block 240, 242, 244. Preferably, each imaginary transversal straight line 505 that is arranged in a longitudinal direction SC, SL in between two neighbouring primary shoulder blocks 222, 224, propagates through a secondary shoulder block 240, 242, 244. As indicated in Fig. 2a, the second imaginary transversal straight line 505 is parallel to the transversal direction ST, AX.

Moreover, preferably such a parts of the groove pattern 310 that are left in between primary shoulder blocks 220, 222, 224 are substantially transversal. Thus such parts of the groove pattern 310 that are left in between primary shoulder blocks 220, 222, 224 have a length and a width, of which the length is longer, and the length is parallel to the transversal direction AX, SL or forms an angle between the transversal direction AX, SL, wherein the angle is at most 15 degrees. This has the effect that the transversal grooves 312, 314 are made reasonable short, which improves drainage of water and/or slush from below the tread.

In a similar manner, preferably such a parts of the groove pattern 310 that are left in between secondary shoulder blocks 240, 242, 244 are substantially transversal. Thus such parts of the groove pattern 310 that are left in between secondary shoulder blocks 240, 242, 244 have a length and a width, of which the length is longer, and the length is parallel to the transversal direction AX, SL or forms an angle between the transversal direction AX, SL, wherein the angle is at most 15 degrees.

However, for reasons indicated above, the a first primary transversal block or block part 212 is arranged at an angle relative to the transversal direction AX, SL. The first primary transversal block or block part 212 has a length L₂₁₂ and a width W₂₁₂, as defined in more detail above. In a preferable embodiment, the length is L₂₁₂ forms an angle of at least 30 degrees with the transversal direction (AX, ST) and such a parts of the groove pattern 310 that are left in between primary shoulder blocks 220, 222, 224 length is parallel to the transversal direction AX, SL or forms an angle between the transversal direction AX, SL, wherein the angle is at most 15 degrees. In this way, the primary transversal grooves 312, 314 do not propagate straight. In contrast, near the central line, the transversal grooves are directed in a larger angle relative to the transversal direction (AX, ST) than near a the primary boundary B1. This applies also to the secondary transversal grooves 332, 334.

Referring to Fig. 2a, in an embodiment, the middle block 210 comprises the first secondary transversal block part 216 whereby the first secondary transversal block part 216 is not separated from the middle block 210 by a portion of the groove pattern 310. Thus, the first secondary transversal groove 332 extends from the secondary boundary B2 to the middle block 210.

Referring to Fig. 2a, in an embodiment, the middle block 210 comprises the second secondary transversal block part 218, whereby the second secondary transversal block part 218 is not separated from the middle block 210 by a portion of the groove pattern 310. Thus, the first secondary transversal groove 332 extends from the secondary boundary B2 to the middle block 210.

Referring to Fig. 3a, in an embodiment, the second secondary transversal groove 334 extends from the secondary boundary B2 to the middle block 210. In an embodiment, both the first secondary transversal groove 332 and the second secondary transversal groove 334 extend from the secondary boundary B2 to the middle block 210.

Referring to Fig. 3a, in an embodiment, the first secondary transversal groove 332 extends from the first secondary intersection 121 into two directions that are reverse to each other.

Referring to Fig. 3a, in an embodiment, the second secondary transversal groove 334 extends from the second secondary intersection 122 into two directions that are reverse to each other.

Referring to Figs. 2a and 3a, one of the secondary shoulder blocks (240, 242) may be referred to as a first secondary shoulder block 242 and one of the secondary shoulder blocks (220, 244) may be referred to as a second secondary shoulder block 244.

In an embodiment, the tread block arrangement 200 comprises a secondary intermediate block 250, of which a part is arranged in a direction of extension DE₃₃₂ of the first secondary transversal groove 332 in between the second secondary shoulder block 244 and the second secondary transversal block or block part 218. Thus, the groove pattern 310 comprises a second secondary longitudinal groove 344. A part of the second secondary longitudinal groove 344 is left in between the first secondary shoulder block 242 and the first secondary transversal block or block part 216. A part of the second secondary longitudinal groove 344 is left in between the second secondary shoulder block 244 and the secondary intermediate block 250.

Moreover, as indicated in Fig. 3a, the first secondary transversal groove 332 extends from the first secondary intersection 121 to a third secondary intersection 123 of the first secondary transversal groove 332 and the second secondary longitudinal groove 344. Furthermore, the second secondary transversal groove 334 extends from the second secondary intersection 122 to a fourth secondary intersection 124 of the second secondary transversal groove 334 and the second secondary longitudinal groove 344.

Referring to Fig. 3a, in an embodiment, the first secondary longitudinal groove 342 forms a crossing with the first secondary transversal groove 332 at the first secondary intersection 121. Thus, the first secondary longitudinal groove 342 extends from the first secondary intersection 121 in two directions that are reverse to each other.

Referring to Fig. 3a, in an embodiment, the first secondary longitudinal groove 342 extends in between the first secondary end wall E21 of the first secondary longitudinal groove 342 and a second secondary end E22 of the first secondary longitudinal groove 342 such that the first secondary longitudinal groove 342 forms only one crossing with a transversal part (332, 334) of the groove pattern 310. The term "crossing" was discussed in more detail in connection with the structure of the primary part 202.

Referring to Fig. 3a, in an embodiment, the first secondary longitudinal groove 342 extends only in one direction from the second secondary intersection I22. Referring to Fig. 3a, in an embodiment, the second secondary transversal block or block part 218 forms a part of a side wall of also the second secondary transversal groove 334.

Without a reference to any Fig., in an embodiment, a part the first secondary longitudinal groove 342 has an inclined bottom. For the corresponding first primary longitudinal groove 322 this is shown in Fig. 3b. In a similar manner, in an embodiment, a part the first secondary longitudinal groove 342 has an inclined bottom such that the depth of the first secondary longitudinal groove 342 decreases, when moving from the first secondary intersection 121 towards an end defined by the first secondary end wall E21. Preferably the depth of the first secondary longitudinal groove 342 decreases in a continuous manner, when moving from the first secondary intersection 121 towards an end defined by the first secondary end wall E21.

Referring to Fig. 3c, in an embodiment, the first secondary longitudinal groove 342 extends from the first secondary end wall E21 to the first secondary intersection 121 in a secondary direction of extension DE₃₄₂, wherein the secondary direction of extension DE₃₄₂ forms an angle of at least 120 degrees with the direction of rotation R. This angle may be at least 150 degrees or at least 165 degrees, as discussed in detail for the direction DE₃₂₂ on the primary side 202. How the tread block arrangement defines a direction of rotation has been discussed above. Moreover, a tire and/or a tread band may comprise a marking indicative of a direction of rotation.

Preferably, the first secondary longitudinal groove 342 is short compared to the second secondary longitudinal groove 344. Thus, in an embodiment, the first secondary longitudinal groove 342 (i.e. the whole first secondary longitudinal groove 342) is left in between the second secondary longitudinal groove 344 and the central line CL. Moreover, in an embodiment, only a part of the second secondary longitudinal groove 344 is left in between the first secondary longitudinal groove 342 and the secondary boundary B2.

Referring to Fig. 3c, in an embodiment, the tread block arrangement 200 comprises a stud 550. Such studs 550 improve friction on icy roads. However, the tread 170 formed by the tread block arrangement is also applicable as a tread of a studless tire, such as a studless winter tire. A tire 100 having the tread block arrangement 200 as described above, may comprise a marking indicative that the tire 100 is suitable for use as a winter tire. The tread block arrangement 200 may limit an indicator 540 indicative of depth of the groove pattern 310. The indicator 540 may also be indicative of the of the groove pattern 310 having a depth that is sufficient for driving on a snowy road.

As for the other markings 520, 530, the tire 100, tread band 150, or the tread block arrangement 200 may comprise a second marking 520 (see Fig. 1a) indicative of the tire 100 being suitable for use as a winter tire. The tire 100, tread band 150, or the tread block arrangement 200 may comprise a third marking 530 indicative of a maximum driving speed for the tire 100. In a preferable embodiment, the tire 100, tread band 150, or the tread block arrangement 200 comprises the first marking 510 indicative of the direction of rotation R and the second marking 520 indicative of the tire 100 being suitable for use as a winter tire.

## Claims

1. A tread block arrangement (200) suitable for a tire (100) or for a tread band (150) for a tire (100), the tread block arrangement (200) comprising
- primary shoulder blocks (220, 222, 224), including a first primary shoulder block (222) and a second primary shoulder block (224), the primary shoulder blocks (220, 222, 224) defining a primary boundary (B1) of the tread block arrangement (200),
- a middle block (210) extending through the tread block arrangement (200) in a direction (SC, SL) that is perpendicular to a transversal direction (ST, AX) of the tread block arrangement (200) and perpendicular to the thickness (T) of the tread block arrangement (200),
- a first primary transversal block or block part (212) that is part of the middle block (210) such that at least a part of a primary shoulder block (220, 222, 224) is arranged in the transversal direction (ST, AX) in between a part of the first primary transversal block or block part (212) and the primary boundary (B1), and
- a second primary transversal block or block part (214), such that
- each block (210, 220) of the tread block arrangement (200) is separated from another block (210, 220) of the tread block arrangement (200) by a portion of a groove pattern (310), the groove pattern (310) comprising
- a first primary longitudinal groove (322),
- a first primary transversal groove (312) extending from the primary boundary (B1) towards a central line (CL) of the tread block arrangement (200),
- a second primary transversal groove (314) extending from the primary boundary (B1) towards the central line (CL) of the tread block arrangement (200), wherein
- the first primary transversal block or block part (212) forms
• a part of a side wall of the first primary longitudinal groove (322),
• a part of another side wall of the first primary longitudinal groove (322),
• a first primary end wall (E11) of the first primary longitudinal groove (322), and
• a part of a side wall of the first primary transversal groove (312),
- the second primary transversal block or block part (214) forms a part of another side wall of the first primary transversal groove (312), and
- the first primary longitudinal groove (322) extends
• from the first primary end wall (E11) to a first primary intersection (111) of the first primary longitudinal groove (322) and the first primary transversal groove (312) and
• from the first primary intersection (111) to a second primary intersection (112) of the first primary longitudinal groove (322) and the second primary transversal groove (314),
**characterized in that** the tread block arrangement (200) comprises
- a primary intermediate block (230), such that
- a part of the primary intermediate block (230) is arranged in a direction of extension (DE₃₁₂) of the first primary transversal groove (312) in between the second primary shoulder block (224) and the second primary transversal block or block part (214), whereby the groove pattern (310) comprises
- a second primary longitudinal groove (324) of which
• a part is left in between the first primary shoulder block (222) and the first primary transversal block (212) or block part and
• a part is left in between the second primary shoulder block (224) and the primary intermediate block (230) such that
- the first primary transversal groove (312) extends from the first primary intersection (111) to a third primary intersection (113) of the first primary transversal groove (312) and the second primary longitudinal groove (324) and
- the second primary transversal groove (314) extends from the second primary intersection (112) to a fourth primary intersection (114) of the second primary transversal groove (314) and the second primary longitudinal groove (324).

2. The tread block arrangement (200) of claim 1, wherein
- the middle block (210) comprises the first primary transversal block part (212) whereby
- the first primary transversal block part (212) is not separated from the middle block (210) by a portion of the groove pattern (310) and
- the first primary transversal groove (312) extends from the primary boundary (B1) to the middle block (210)

3. The tread block arrangement (200) of claim 1 or 2, wherein
- the middle block (210) comprises the second primary transversal block part (214), whereby
- the second primary transversal block part (214) is not separated from the middle block (210) by a portion of the groove pattern (310) and
- the first primary transversal groove (312) extends from the primary boundary (B1) to the middle block (210).

4. The tread block arrangement (200) of any of the claims 1 to 3, wherein
- the second primary transversal groove (314) extends from the primary boundary (B1) to the middle block (210);
preferably also
- the first primary transversal groove (312) extends from the primary boundary (B1) to the middle block (210).

5. The tread block arrangement (200) of any of the claims 1 to 4, wherein
- first primary transversal block or block part (212) has a length (L₂₁₂) and a width (W₂₁₂), wherein the length (L₂₁₂) is greater than the width (W₂₁₂), whereby
- the tread block arrangement (200) defines a direction of rotation (R) such that the length (L₂₁₂) of the first primary transversal block or block part (212) is parallel to a direction (DE₂₁₂) that has:
- a first positive component (C₁) in a direction that is parallel to the transversal direction (AX, ST) and is directed from the primary boundary (B1) towards to central line (CL) and
- a second positive component (C₂) in the direction of rotation (R), which is perpendicular to the transversal direction (AX, ST) and to the thickness (T) of the tread block arrangement, wherein
- the first primary longitudinal groove (322) extends from the first primary end wall (E11) to the first primary intersection (111) in a primary direction of extension (DE₃₂₂) and
- the primary direction of extension (DE₃₂₂) forms an angle of at least 120 degrees with the direction of rotation (R).

6. The tread block arrangement (200) of any of the claims 1 to 5, wherein
- the first primary transversal groove (312) extends from the first primary intersection (111) into two directions that are reverse to each other and/or
- the second primary transversal groove (314) extends from the second primary intersection (112) into two directions that are reverse to each other.

7. The tread block arrangement (200) of any of the claims 1 to 6, wherein
- the first primary longitudinal groove (322) forms a crossing at the first primary intersection (111), whereby the first primary longitudinal groove (322) extends from the first primary intersection (111) in two directions that are reverse to each other.

8. The tread block arrangement (200) of any of the claims 1 to 7, wherein
- the first primary longitudinal groove (322) extends in between the first primary end wall (E11) of the first primary longitudinal groove (322) and a second primary end (E12) of the first primary longitudinal groove (322) such that the first primary longitudinal groove (322) forms only one crossing with transversal parts (312, 314) of the groove pattern (310).

9. The tread block arrangement (200) of any of the claims 1 to 10, wherein
- the first primary longitudinal groove (322) extends only in one direction from the second primary intersection (112).

10. The tread block arrangement of any of the claims 1 to 9, wherein
- a part the first primary longitudinal groove (322) has an inclined bottom such that the depth of the first primary longitudinal groove (322) decreases when moving from the first primary intersection (111) towards an end (E11') the first primary longitudinal groove (322), the end (E11') being defined by the first primary end wall (E11), preferably
- a part the first primary longitudinal groove (322) has an inclined bottom such that the depth of the first primary longitudinal groove (322) decreases in a continuous manner, when moving from the first primary intersection (111) towards an end (E11') defined by the first primary end wall (E11).

11. The tread block arrangement (200) of any of the claims 1 to 10, wherein
- the central line (CL) divides the tread block arrangement (200) to a primary part (202) and a secondary part (204) such that
• the primary part (202) limits a primary portion (310₂) of the groove pattern (310) and
• the secondary part (204) limits a secondary portion (310₄) of the groove pattern (310), wherein
- the secondary portion (310₄) of the groove pattern (310) is
• a longitudinally transferred mirror image of the primary portion (310₂) of the groove pattern (310) or
• a mirror image of the primary portion (310₂) of the groove pattern (310).

12. The tread block arrangement (200) of any of the claims 1 to 11, comprising
- secondary shoulder blocks (240, 242, 244) defining a secondary boundary (B2) such that the central line (CL) is left in between the primary boundary (B1) and the secondary boundary (B2) and
- in the transversal direction (ST, AX) in between the central line (CL) and the secondary boundary (B2)
• a first secondary transversal block or block part (216),
• a second secondary transversal block or block part (218), and
• a secondary intermediate block or block part (250), such that the groove pattern (310) comprises
- a first secondary longitudinal groove (342),
- a first secondary transversal groove (332) extending from the secondary boundary (B2) towards the central line (CL) of the tread block arrangement (200),
- a second secondary transversal groove (334) extending from the secondary boundary (B2) towards the central line (CL) of the tread block arrangement (200), wherein
- the first secondary transversal block or block part (216) forms
• a part of a side wall of the first secondary longitudinal groove (342),
• a part of another side wall of the first secondary longitudinal groove (342),
• a first secondary end wall (E21) of the first secondary longitudinal groove (342), and
• a part of a side wall of the first secondary transversal groove (332),
- the second secondary transversal block or block part (218) forms a part of another side wall of the first secondary transversal groove (332), and
- the first secondary longitudinal groove (342) extends
• from the first secondary end wall (E21) to a first secondary intersection (121) of the first secondary longitudinal groove (342) and the first secondary transversal groove (332) and
• from the first secondary intersection (121) to a second secondary intersection (I22) of the first secondary longitudinal groove (342) and the second secondary transversal groove (334).

13. The tread block arrangement (200) of the claim 12, wherein
- the primary shoulder blocks (220, 222, 224) and the secondary shoulder blocks (240, 242, 244) are arranged such that
- a first imaginary transversal straight line (500) can be arranged in between two neighbouring secondary shoulder blocks (242, 244) in a direction (SL) that is perpendicular to the transversal direction (ST, AX) and perpendicular to the thickness of the tread block arrangement (200) such that the first imaginary transversal straight line (500) propagates through a primary shoulder block (220, 222, 224) and/or
- a second imaginary transversal straight line (505) can be arranged in between two neighbouring primary shoulder blocks (222, 224) in a direction (SL) that is perpendicular to the transversal direction (ST, AX) and perpendicular to the thickness of the tread block arrangement (200) such that the second imaginary transversal straight line (505) propagates through a secondary shoulder block (240, 242, 244);
preferably
- each imaginary transversal straight line (500) arranged in between two neighbouring secondary shoulder blocks (242, 244) in a longitudinal or circumferential direction (SL, SC) propagates through a primary shoulder block (220) and
- each imaginary transversal straight line (505) arranged in between two neighbouring primary shoulder blocks (222, 224) in a longitudinal or circumferential direction (SL) propagates through a secondary shoulder block (240, 242, 244).

14. A tire (100) or a tread band (150) having a tread (170), wherein
- the tread (170) is formed of only one tread block arrangement of any of the claims 1 to 13, whereby
- the tread (170) is free from a transversal groove that extends from the primary boundary (B1) to an opposite secondary boundary (B2).

## Patentansprüche

1. Profilblockanordnung (200), die für einen Reifen (100) oder ein Laufflächenband (150) eines Reifens (100) geeignet ist, wobei die Profilblockanordnung (200) Folgendes umfasst:
- primäre Schulterblöcke (220, 222, 224), die einen ersten primären Schulterblock (222) und einen zweiten primären Schulterblock (224) umfassen, wobei die primären Schulterblöcke (220, 222, 224) eine primäre Begrenzung (B1) der Profilblockanordnung (200) definieren;
- einen mittleren Block (210), der sich durch die Profilblockanordnung (200) hindurch in einer Richtung (SC, SL) erstreckt, die zu einer Querrichtung (ST, AX) der Profilblockanordnung (200) senkrecht und zu der Dicke (T) der Profilblockanordnung (200) senkrecht verläuft;
- einen ersten primären Querblock oder Querblockteil (212), der so Teil des mittleren Blocks (210) ist, dass mindestens ein Teil eines primären Schulterblocks (220, 222, 224) in der Querrichtung (ST, AX) zwischen einem Teil des ersten primären Querblocks oder Querblockteils (212) und der primären Begrenzung (B1) angeordnet ist; und
- einen zweiten primären Querblock oder Querblockteil (214), so dass
- jeder Block (210, 220) der Profilblockanordnung (200) von einem anderen Block (210, 220) der Profilblockanordnung (200) durch einen Abschnitt eines Rillenmusters (310) getrennt ist, wobei das Rillenmuster (310) Folgendes umfasst:
- eine erste primäre Längsrille (322);
- eine erste primäre Querrille (312), die sich von der primären Begrenzung (B1) aus hin zu einer Mittellinie (CL) der Profilblockanordnung (200) erstreckt;
- eine zweite primäre Querrille (314), die sich von der primären Begrenzung (B1) aus hin zu einer Mittellinie (CL) der Profilblockanordnung (200) erstreckt; wobei
- der erste primäre Querblock oder Querblockteil (212) Folgendes ausbildet:
• einen Teil einer Seitenwand der ersten primären Längsrille (322);
• einen Teil einer anderen Seitenwand der ersten primären Längsrille (322);
• eine erste primäre Stirnwand (E11) der ersten primären Längsrille (322); und
• einen Teil einer Seitenwand der ersten primären Querrille (312);
- der zweite primäre Querblock oder Querblockteil (214) einen Teil einer anderen Seitenwand der ersten primären Querrille (312) ausbildet; und
- die erste primäre Längsrille (322) sich erstreckt
• von der ersten primären Stirnwand (E11) bis zu einem ersten primären Schnittpunkt (I11) der ersten primären Längsrille (322) und der ersten primären Querrille (312) und
• von dem ersten primären Schnittpunkt (I11) bis zu einem zweiten primären Schnittpunkt (I12) der ersten primären Längsrille (322) und der zweiten primären Querrille (314);
**dadurch gekennzeichnet, dass** die Profilblockanordnung (200) Folgendes umfasst:
- einen Zwischenblock (230), so dass
- ein Teil des primären Zwischenblocks (230) in einer Verlängerungsrichtung (DE₃₁₂) der ersten primären Querrille (312) zwischen dem zweiten primären Schulterblock (224) und dem zweiten primären Querblock oder Querblockteil (214) angeordnet ist, wobei das Rillenmuster (310) Folgendes umfasst:
- eine zweite primäre Längsrille (324), von der
• ein Teil zwischen dem ersten primären Schulterblock (222) und dem ersten primären Querblock (212) oder Querblockteil verbleibt und
• ein Teil zwischen dem zweiten primären Schulterblock (224) und dem primären Zwischenblock (230) so verbleibt, dass
- die erste primäre Querrille (312) sich von dem ersten primären Schnittpunkt (I11) bis zu einem dritten primären Schnittpunkt (I13) der ersten primären Querrille (312) und der zweiten primären Längsrille (324) erstreckt und
- die zweite primäre Querrille (314) sich von dem zweiten primären Schnittpunkt (I12) bis zu einem vierten primären Schnittpunkt (I14) der zweiten primären Querrille (314) und der zweiten primären Längsrille (324) erstreckt.

2. Profilblockanordnung (200) nach Anspruch 1, bei der
- der mittlere Block (210) den ersten primären Querblockteil (212) umfasst, wobei
- der erste primäre Querblockteil (212) nicht von dem mittleren Block (210) durch einen Abschnitt des Rillenmusters (310) getrennt ist und
- die erste primäre Querrille (312) sich von der primären Begrenzung (B1) bis zu dem mittleren Block (210) erstreckt.

3. Profilblockanordnung (200) nach Anspruch 1 oder 2, bei der
- der mittlere Block (210) den zweiten primären Querblockteil (214) umfasst, wobei
- der zweite primäre Querblockteil (214) nicht von dem mittleren Block (210) durch einen Abschnitt des Rillenmusters (310) getrennt ist und
- die erste primäre Querrille (312) sich von der primären Begrenzung (B1) bis zu dem mittleren Block (210) erstreckt.

4. Profilblockanordnung (200) nach einem der Ansprüche 1 bis 3, bei der
- die zweite primäre Querrille (314) sich von der primären Begrenzung (B1) bis zu dem mittleren Block (210) erstreckt;
wobei vorzugsweise auch
- die erste primäre Querrille (312) sich von der primären Begrenzung (B1) bis zu dem mittleren Block (210) erstreckt.

5. Profilblockanordnung (200) nach einem der Ansprüche 1 bis 4, bei der
- der erste primäre Querblock oder Querblockteil (212) eine Länge (L₂₁₂) und eine Breite (W₂₁₂) aufweist, wobei die Länge (L₂₁₂) größer als die Breite (W₂₁₂) ist, wobei
- die Profilblockanordnung (200) eine Drehrichtung (R) so definiert, dass die Länge (L₂₁₂) des ersten primären Querblocks oder Querblockteils (212) parallel zu einer Richtung (DE₂₁₂) verläuft, die Folgendes aufweist:
- eine erste positive Komponente (C₁) in einer Richtung, die parallel zu der Querrichtung (AX, ST) verläuft und von der primären Begrenzung (B1) aus hin zur Mittellinie (CL) gerichtet ist und
- eine zweite positive Komponente (C₂) in der Drehrichtung (R), die senkrecht zu der Querrichtung (AX, ST) und zu der Dicke (T) der Profilblockanordnung verläuft, wobei
- die erste primäre Längsrille (322) sich von der ersten primären Stirnwand (E11) bis zu dem ersten primären Schnittpunkt (I11) in einer primären Verlängerungsrichtung (DE₃₂₂) erstreckt und
- die primäre Verlängerungsrichtung (DE₃₂₂) einen Winkel von mindestens 120 Grad zu der Drehrichtung (R) bildet.

6. Profilblockanordnung (200) nach einem der Ansprüche 1 bis 5, bei der
- die erste primäre Querrille (312) sich von dem ersten primären Schnittpunkt (I11) aus in zwei Richtungen erstreckt, die zueinander entgegengesetzt sind und/oder
- die zweite primäre Querrille (314) sich von dem zweiten primären Schnittpunkt (I12) aus in zwei Richtungen erstreckt, die zueinander entgegengesetzt sind.

7. Profilblockanordnung (200) nach einem der Ansprüche 1 bis 6, bei der
- die erste primäre Längsrille (322) an dem ersten primären Schnittpunkt (I11) eine Kreuzung bildet, wobei die erste primäre Längsrille (322) sich von dem ersten primären Schnittpunkt (I11) aus in zwei Richtungen erstreckt, die zueinander entgegengesetzt sind.

8. Profilblockanordnung (200) nach einem der Ansprüche 1 bis 7, bei der
- die erste primäre Längsrille (322) sich so zwischen der ersten primären Stirnwand (E11) der ersten primären Längsrille (322) und einem zweiten primären Ende (E12) der ersten primären Längsrille (322) erstreckt, dass die erste primäre Längsrille (322) nur eine Kreuzung mit Querteilen (312, 314) des Rillenmusters (310) bildet.

9. Profilblockanordnung (200) nach einem der Ansprüche 1 bis 10, bei der
- die erste primäre Längsrille (322) sich von dem zweiten primären Schnittpunkt (I12) aus nur in einer Richtung erstreckt.

10. Profilblockanordnung nach einem der Ansprüche 1 bis 9, bei der
- ein Teil der ersten primären Längsrille (322) einen geneigten Boden so aufweist, dass die Tiefe der ersten primären Längsrille (322) beim Übergang von dem ersten primären Schnittpunkt (I11) hin zu einem Ende (E11') der ersten primären Längsrille (322) abnimmt, wobei das Ende (E11') durch die erste primäre Stirnwand (E11) definiert wird, wobei vorzugsweise
- ein Teil der ersten primären Längsrille (322) einen geneigten Boden so aufweist, dass die Tiefe der ersten primären Längsrille (322) beim Übergang von dem ersten primären Schnittpunkt (I11) hin zu einem Ende (E11'), das durch die erste primäre Stirnwand (E11) definiert wird, kontinuierlich abnimmt.

11. Profilblockanordnung (200) nach einem der Ansprüche 1 bis 10, bei der
- die Mittellinie (CL) die Profilblockanordnung (200) so in einen primären Teil (202) und einen sekundären Teil (204) aufteilt, dass
• der primäre Teil (202) einen primären Abschnitt (310₂) des Rillenmusters (310) begrenzt und
• der sekundäre Teil (204) einen sekundären Abschnitt (310₄) des Rillenmusters (310) begrenzt, wobei
- der sekundäre Abschnitt (310₄) des Rillenmusters (310)
• ein in Längsrichtung übertragenes Spiegelbild des primären Abschnitts (310₂) des Rillenmusters (310) ist oder
• ein Spiegelbild des primären Abschnitts (310₂) des Rillenmusters (310) ist.

12. Profilblockanordnung (200) nach einem der Ansprüche 1 bis 11, die Folgendes umfasst:
- sekundäre Schulterblöcke (240, 242, 244), die eine sekundäre Begrenzung (B2) so definieren, dass die Mittellinie (CL) zwischen der primären Begrenzung (B1) und der sekundären Begrenzung (B2) verbleibt und
- in der Querrichtung (ST, AX) zwischen der Mittellinie (CL) und der sekundären Begrenzung (B2)
• ein erster sekundärer Querblock oder Querblockteil (216);
• ein zweiter sekundärer Querblock oder Querblockteil (218); und
• ein sekundärer Zwischenblock oder Zwischenblockteil (250) so verbleibt, dass das Rillenmuster (310) Folgendes umfasst:
- eine erste sekundäre Längsrille (342);
- eine erste sekundäre Querrille (332), die sich von der sekundären Begrenzung (B2) aus hin zu einer Mittellinie (CL) der Profilblockanordnung (200) erstreckt;
- eine zweite sekundäre Querrille (334), die sich von der sekundären Begrenzung (B2) aus hin zu einer Mittellinie (CL) der Profilblockanordnung (200) erstreckt; wobei
- der erste sekundäre Querblock oder Querblockteil (216) Folgendes ausbildet:
• einen Teil einer Seitenwand der ersten primären Längsrille (342);
• einen Teil einer anderen Seitenwand der ersten sekundären Längsrille (342);
• eine erste sekundäre Stirnwand (E21) der ersten sekundären Längsrille (342); und
• einen Teil einer Seitenwand der ersten sekundären Querrille (332);
- der zweite sekundäre Querblock oder Querblockteil (218) einen Teil einer anderen Seitenwand der ersten sekundären Querrille (332) ausbildet; und
- die erste sekundäre Längsrille (342) sich erstreckt
• von der ersten sekundären Stirnwand (E21) bis zu einem ersten sekundären Schnittpunkt (I21) der ersten sekundären Längsrille (342) und der ersten sekundären Querrille (332) und
• von dem ersten sekundären Schnittpunkt (I21) bis zu einem zweiten sekundären Schnittpunkt (I22) der ersten sekundären Längsrille (342) und der zweiten sekundären Querrille (334).

13. Profilblockanordnung (200) nach Anspruch 12, bei der
- die primären Schulterblöcke (220, 222, 224) und die sekundären Schulterblöcke (240, 242, 244) so angeordnet sind, dass
- eine erste imaginäre gerade Querlinie (500) sich zwischen zwei benachbarten sekundären Schulterblöcken (242, 244) in einer Richtung (SL), die zu der Querrichtung (ST, AX) senkrecht und zu der Dicke der Profilblockanordnung (200) senkrecht verläuft, so anordnen lässt, dass die erste imaginäre gerade Querlinie (500) sich durch einen primären Schulterblock (220, 222, 224) ausbreitet und/oder
- eine zweite imaginäre gerade Querlinie (505) sich zwischen zwei benachbarten primären Schulterblöcken (222, 224) in einer Richtung (SL), die zu der Querrichtung (ST, AX) senkrecht und zu der Dicke der Profilblockanordnung (200) senkrecht verläuft, so anordnen lässt, dass die zweite imaginäre gerade Querlinie (505) sich durch einen sekundären Schulterblock (240, 242, 244) ausbreitet;
wobei vorzugsweise
- jede imaginäre gerade Querlinie (500), die zwischen zwei benachbarten sekundären Schulterblöcken (242, 244) in einer Längs- oder Umfangsrichtung (SL, SC) angeordnet ist, sich durch einen primären Schulterblock (220) ausbreitet und
- jede imaginäre gerade Querlinie (505), die zwischen zwei benachbarten primären Schulterblöcken (222, 224) in einer Längs- oder Umfangsrichtung (SL) angeordnet ist, sich durch einen sekundären Schulterblock (240, 242, 244) ausbreitet.

14. Reifen (100) oder Laufflächenband (150) mit einer Lauffläche, wobei
- die Lauffläche (170) mit nur einer Profilblockanordnung (200) nach einem der Ansprüche 1 bis 13 ausgebildet ist, wobei
- die Lauffläche (170) keine Querrille aufweist, die sich von der primären Begrenzung (B1) bis zu einer gegenüberliegenden sekundären Begrenzung (B2) erstreckt.

## Revendications

1. Agencement de pavé (200) approprié pour un pneu (100) ou pour une bande de roulement (150) pour un pneu (100), l'agencement de pavé (200) comprenant
- des pavés d'épaulement primaires (220, 222, 224), incluant un premier pavé d'épaulement primaire (222) et un second pavé d'épaulement primaire (224), les pavés d'épaulement primaires (220, 222, 224) définissant une limite primaire (B1) de l'agencement de pavé (200),
- un pavé médian (210) s'étendant à travers l'agencement de pavé (200) dans une direction (SC, SL) qui est perpendiculaire à une direction transversale (ST, AX) de l'agencement de pavé (200) et perpendiculaire à l'épaisseur (T) de l'agencement de pavé (200),
- un premier pavé ou première partie de pavé transversal primaire (212) qui fait partie du pavé médian (210) de sorte qu'au moins une partie d'un pavé d'épaulement primaire (220, 222, 224) est agencée dans la direction transversale (ST, AX) entre une partie du premier pavé ou première partie de pavé transversal primaire (212) et la limite primaire (B1), et
- un second pavé ou seconde partie de pavé transversal primaire (214), de sorte que
- chaque pavé (210, 220) de l'agencement de pavé (200) est séparé d'un autre pavé (210, 220) de l'agencement de pavé (200) par une portion d'un motif de rainures (310), le motif de rainures (310) comprenant
- une première rainure longitudinale primaire (322),
- une première rainure transversale primaire (312) s'étendant à partir de la limite primaire (B1) en direction d'une ligne centrale (CL) de l'agencement de pavé (200),
- une seconde rainure transversale primaire (314) s'étendant à partir de la limite primaire (B1) en direction de la ligne centrale (CL) de l'agencement de pavé (200), dans lequel
- le premier pavé ou première partie de pavé transversal primaire (212) forme
• une partie d'une paroi latérale de la première rainure longitudinale primaire (322),
• une partie d'une autre paroi latérale de la première rainure longitudinale primaire (322),
• une première paroi d'extrémité primaire (E11) de la première rainure longitudinale primaire (322), et
• une partie d'une paroi latérale de la première rainure transversale primaire (312),
- le second pavé ou seconde partie de pavé transversal primaire (214) forme une partie d'une autre paroi latérale de la première rainure transversale primaire (312), et
- la première rainure longitudinale primaire (322) s'étend
• de la première paroi d'extrémité primaire (E11) à une première intersection primaire (I11) de la première rainure longitudinale primaire (322) et de la première rainure transversale primaire (312) et
• de la première intersection primaire (I11) à une deuxième intersection primaire (I12) de la première rainure longitudinale primaire (322) et de la seconde rainure transversale primaire (314),
**caractérisé en ce que** l'agencement de pavé (200) comprend
- un pavé intermédiaire primaire (230), de sorte que
- une partie du pavé intermédiaire primaire (230) est agencée dans une direction d'extension (DE₃₁₂) de la première rainure transversale primaire (312) entre le second pavé d'épaulement primaire (224) et le second pavé ou seconde partie de pavé transversal primaire (214), moyennant quoi le motif de rainures (310) comprend
- une seconde rainure longitudinale primaire (324) dont
• une partie est laissée entre le premier pavé d'épaulement primaire (222) et le premier pavé (212) ou première partie de pavé transversal primaire et
• une partie est laissée entre le second pavé d'épaulement primaire (224) et le pavé intermédiaire primaire (230) de sorte que
- la première rainure transversale primaire (312) s'étend de la première intersection primaire (I11) à une troisième intersection primaire (I13) de la première rainure transversale primaire (312) et de la seconde rainure longitudinale primaire (324) et
- la seconde rainure transversale primaire (314) s'étend de la deuxième intersection primaire (I12) à une quatrième intersection primaire (I14) de la seconde rainure transversale primaire (314) et de la seconde rainure longitudinale primaire (324).

2. Agencement de pavé (200) selon la revendication 1, dans lequel
- le pavé médian (210) comprend la première partie de pavé transversal primaire (212), moyennant quoi
- la première partie de pavé transversal primaire (212) n'est pas séparée du pavé médian (210) par une portion du motif de rainures (310) et
- la première rainure transversale primaire (312) s'étend de la limite primaire (B1) au pavé médian (210).

3. Agencement de pavé (200) selon la revendication 1 ou 2, dans lequel
- le pavé médian (210) comprend la seconde partie de pavé transversal primaire (214), moyennant quoi
- la seconde partie de pavé transversal primaire (214) n'est pas séparée du pavé médian (210) par une portion du motif de rainures (310) et
- la première rainure transversale primaire (312) s'étend de la limite primaire (B1) au pavé médian (210).

4. Agencement de pavé (200) selon l'une quelconque des revendications 1 à 3, dans lequel
- la seconde rainure transversale primaire (314) s'étend de la limite primaire (B1) au pavé médian (210) ;
de préférence également
- la première rainure transversale primaire (312) s'étend de la limite primaire (B1) au pavé médian (210).

5. Agencement de pavé (200) selon l'une quelconque des revendications 1 à 4, dans lequel
- le premier pavé ou première partie de pavé transversal primaire (212) possède une longueur (L₂₁₂) et une largeur (W₂₁₂), dans lequel la longueur (L₂₁₂) est supérieure à la largeur (W₂₁₂), moyennant quoi
- l'agencement de pavé (200) définit une direction de rotation (R) de sorte que la longueur (L₂₁₂) du premier pavé ou première partie de pavé transversal primaire (212) est parallèle à une direction (DE₂₁₂) qui possède :
- une première composante positive (C₁) dans une direction qui est parallèle à la direction transversale (AX, ST) et qui est orientée à partir de la limite primaire (B1) en direction de la ligne centrale (CL) et
- une seconde composante positive (C₂) dans la direction de rotation (R), qui est perpendiculaire à la direction transversale (AX, ST) et à l'épaisseur (T) de l'agencement de pavé, dans lequel
- la première rainure longitudinale primaire (322) s'étend de la première paroi d'extrémité primaire (E11) à la première intersection primaire (I11) dans une direction d'extension primaire (DE₃₂₂) et
- la direction d'extension primaire (DE322) forme un angle d'au moins 120 degrés avec la direction de rotation (R).

6. Agencement de pavé (200) selon l'une quelconque des revendications 1 à 5, dans lequel
- la première rainure transversale primaire (312) s'étend à partir de la première intersection primaire (I11) dans deux directions qui sont inverses l'une par rapport à l'autre et/ou
- la seconde rainure transversale primaire (314) s'étend à partir de la deuxième intersection primaire (I12) dans deux directions qui sont inverses l'une par rapport à l'autre.

7. Agencement de pavé (200) selon l'une quelconque des revendications 1 à 6, dans lequel
- la première rainure longitudinale primaire (322) forme un croisement au niveau de la première intersection primaire (I11), moyennant quoi la première rainure longitudinale primaire (322) s'étendant à partir de la première intersection primaire (I11) dans deux directions qui sont inverses l'une par rapport à l'autre.

8. Agencement de pavé (200) selon l'une quelconque des revendications 1 à 7, dans lequel
- la première rainure longitudinale primaire (322) s'étend entre la première paroi d'extrémité primaire (E11) de la première rainure longitudinale primaire (322) et une seconde extrémité primaire (E12) de la première rainure longitudinale primaire (322) de sorte que la première rainure longitudinale primaire (322) forme un seul croisement avec des parties transversales (312, 314) du motif de rainures (310).

9. Agencement de pavé (200) selon l'une quelconque des revendications 1 à 10, dans lequel
- la première rainure longitudinale primaire (322) s'étend dans une seule direction à partir de la deuxième intersection primaire (I12).

10. Agencement de pavé selon l'une quelconque des revendications 1 à 9, dans lequel
- une partie de la première rainure longitudinale primaire (322) possède un fond incliné de sorte que la profondeur de la première rainure longitudinale primaire (322) diminue lorsque l'on se déplace à partir de la première intersection primaire (I11) en direction d'une extrémité (E11') de la première rainure longitudinale primaire (322), l'extrémité (E11') étant définie par la première paroi d'extrémité primaire (E11), de préférence
- une partie de la première rainure longitudinale primaire (322) possède un fond incliné de sorte que la profondeur de la première rainure longitudinale primaire (322) diminue d'une manière continue, lorsque l'on se déplace à partir de la première intersection primaire (I11) en direction d'une extrémité (E11') définie par la première paroi d'extrémité primaire (E11).

11. Agencement de pavé (200) selon l'une quelconque des revendications 1 à 10, dans lequel
- la ligne centrale (CL) divise l'agencement de pavé (200) en une partie primaire (202) et une partie secondaire (204) de sorte que
• la partie primaire (202) délimite une portion primaire (310₂) du motif de rainures (310) et
• la partie secondaire (204) délimite une portion secondaire (310₄) du motif de rainures (310), dans lequel
- la partie secondaire (310₄) du motif de rainures (310) est
• une image miroir longitudinalement transférée de la partie primaire (310₂) du motif de rainures (310) ou
• une image miroir de la partie primaire (310₂) du motif de rainures (310).

12. Agencement de pavé (200) selon l'une quelconque des revendications 1 à 11, comprenant
- des pavés d'épaulement secondaires (240, 242, 244) définissant une limite secondaire (B2) de sorte que la ligne centrale (CL) est laissée entre la limite primaire (B1) et la limite secondaire (B2) et
- dans la direction transversale (ST, AX) entre la ligne centrale (CL) et la limite secondaire (B2)
• un premier pavé ou première partie de pavé transversal secondaire (216),
• un second pavé ou seconde partie de pavé transversal secondaire (218), et
• un pavé ou une partie de pavé intermédiaire secondaire (250), de sorte que le motif de rainures (310) comprend
- une première rainure longitudinale secondaire (342),
- une première rainure transversale secondaire (332) s'étendant à partir de la limite secondaire (B2) en direction de la ligne centrale (CL) de l'agencement de pavé (200),
- une seconde rainure transversale secondaire (334) s'étendant à partir de la limite secondaire (B2) en direction de la ligne centrale (CL) de l'agencement de pavé (200), dans lequel
- le premier pavé ou première partie de pavé transversal secondaire (216) forme
• une partie d'une paroi latérale de la première rainure longitudinale secondaire (342),
• une partie d'une autre paroi latérale de la première rainure longitudinale secondaire (342),
• une première paroi d'extrémité secondaire (E21) de la première rainure longitudinale secondaire (342), et
• une partie d'une paroi latérale de la première rainure transversale secondaire (332),
- le second pavé ou seconde partie de pavé transversal secondaire (218) forme une partie d'une autre paroi latérale de la première rainure transversale secondaire (332), et
- la première rainure longitudinale secondaire (342) s'étend
• de la première paroi d'extrémité secondaire (E21) à une première intersection secondaire (I21) de la première rainure longitudinale secondaire (342) et de la première rainure transversale secondaire (332) et
• de la première intersection secondaire (I21) à une seconde intersection secondaire (I22) de la première rainure longitudinale secondaire (342) et de la seconde rainure transversale secondaire (334).

13. Agencement de pavé (200) selon la revendication 12, dans lequel
- les pavés d'épaulement primaires (220, 222, 224) et les pavés d'épaulement secondaires (240, 242, 244) sont agencés de sorte que
- une première ligne droite transversale imaginaire (500) peut être agencée entre deux pavés d'épaulement secondaires voisins (242, 244) dans une direction (SL) qui est perpendiculaire à la direction transversale (ST, AX) et perpendiculaire à l'épaisseur de l'agencement de pavé (200) de sorte que la première ligne droite transversale imaginaire (500) se propage à travers un pavé d'épaulement primaire (220, 222, 224) et/ou
- une seconde ligne droite transversale imaginaire (505) peut être agencée entre deux pavés d'épaulement primaires voisins (222, 224) dans une direction (SL) qui est perpendiculaire à la direction transversale (ST, AX) et perpendiculaire à l'épaisseur de l'agencement de pavé (200) de sorte que la seconde ligne droite transversale imaginaire (505) se propage à travers un pavé d'épaulement secondaire (240, 242, 244) ;
de préférence
- chaque ligne droite transversale imaginaire (500) agencée entre deux pavés d'épaulement secondaires voisins (242, 244) dans une direction longitudinale ou circonférentielle (SL, SC) se propage à travers un pavé d'épaulement primaire (220) et
- chaque ligne droite transversale imaginaire (505) agencée entre deux pavés d'épaulement primaires voisins (222, 224) dans une direction longitudinale ou circonférentielle (SL) se propage à travers un pavé d'épaulement secondaire (240, 242, 244).

14. Pneu (100) ou bande de roulement (150) ayant une chape (170), dans lequel
- la chape (170) est formée d'un seul agencement de pavé selon l'une quelconque des revendications 1 à 13, moyennant quoi
- la chape (170) est dépourvue d'une rainure transversale qui s'étend de la limite primaire (B1) à une limite secondaire opposée (B2).
